# EUROPEAN PATENT APPLICATION

(11) **EP 1 314 349 A1**
(43) Date of publication of application: **28.05.2003**
(21) Application number: 01958517.3
(22) Date of filing: 27.08.2001
(51) Int. Cl.: A01G 3/08

(54) **HIGH TWIG PRUNER**

(30) Priority: 28.08.2000 JP 2000257371
(71) Applicant: Watanabe, Hideaki, Fuji-shi, Shizuoka 419-0201 (JP)
(72) Inventor: Watanabe, Hideaki, Fuji-shi, Shizuoka 419-0201 (JP)
(74) Representative: Grünecker, Kinkeldey, Stockmair & Schwanhäusser Anwaltssozietät
(86) International application number: JP0107318
(87) International publication number: WO02017706

(57) **Abstract**

A high twig pruner, comprising an operating tube or an operating rod of a specified length (33); a saw blade (43) attached to the top end of the operating tube or rod to be movable in the forward and backward directions; a power source installed at the base end of the operating tube or rod; a drive means (80) connected to the power source to perform the forward and backward movements; and power transmission members (70A, 70) for connecting the drive means and the saw blade. The pruning part is formed in the saw blade (43), which is reciprocatory driven by the drive means (80). Thus the structure is simple, and the reduction of weight and size, as well as the improvement of workability in pruning, can be accomplished.

## Description

### TECHNICAL FIELD

The present invention relates to a high twig pruner which prunes twigs, stalks and leaves at rather higher positions of trees, by manual operation of an operator standing on the ground. More particularly, the present invention relates to the twig pruner of which weight of a pruning part is reduced, whereby workability in pruning can be increased.

### BACKGROUND ART

The has been provided a high twig pruner under the prior art, which prunes twigs, stalks and leaves at higher positions of trees, by manual operation of an operator standing on the ground. This type of high twig pruner is used for various purposes, such as for the household purpose, for the forestry, or for the purpose of pruning trees along streets.

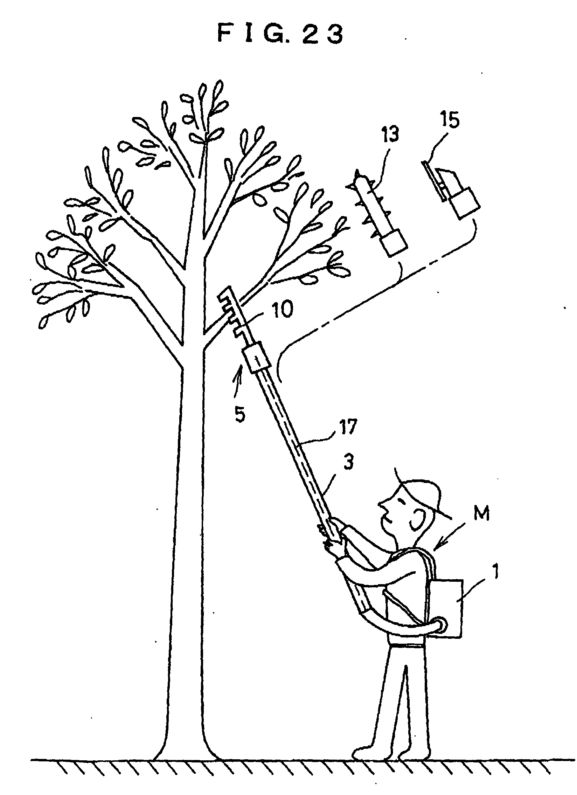

For example, as illustrated in Fig. 23, the conventional high twig pruner comprises, a power driving part 1 carried on the back of an operator M (or held by the hand of the operator M), an operating part 3 comprising an operation tube or an operation rod which is held by the hand of the operator M in order to be operated by the operator M, and a pruning part 5, provided at the top end of the operating part 3 and having a hedge trimmer (clippers) 10, or chain saw 13, or rotary cutter 15, for cutting twigs, stalks and leaves. A power source of power driving part 1 and the pruning part 5 are connected by a power transmission member 17 penetrating through the operating part 3, whereby the pruning part 5 is driven by the power source.

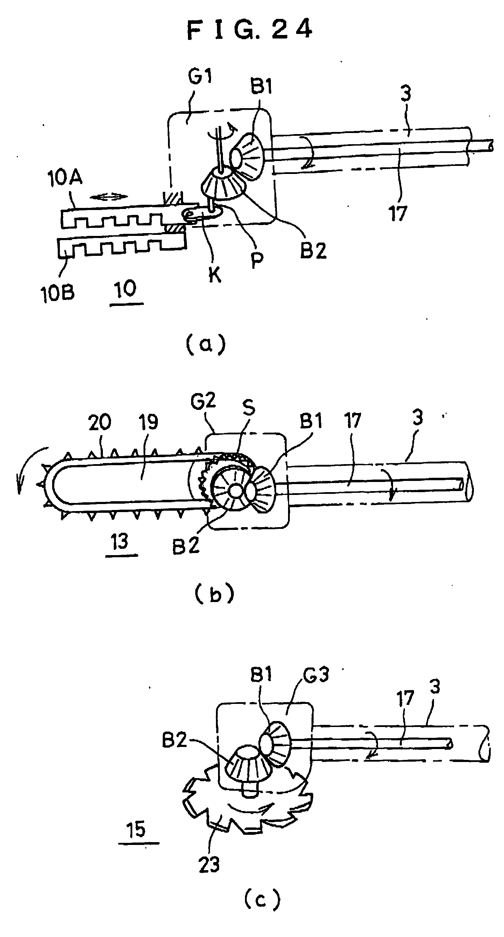

Fig. 24 shows the detailed structure of the pruning part 5. As illustrated in Fig. 24 (a), the hedge trimmer (clippers) 10 is provided with a gearbox G1 at the top end of the operating part 3, which converts the rotative movement of the power transmission member 17, penetrating through the operating part 3, into the rotative movement in the perpendicular direction. This gearbox G1 comprises a bevel gear B1 provided at the top end of the power transmission member 17, and another bevel gear B2 engaged with the bevel gear B1 in the perpendicular direction. The bevel gear B2 has an eccentric pin P on the bottom surface, which serves as the pivot of an end of a crank shaft K. Another end of the crank shaft K is connected, via an unillustrated pivot, to a reciprocatory movable blade 10A, which serves as a pair of clippers 10 together with a fixed blade 10B. Thus, the rotative movement of the power transmission member 17 is converted to a reciprocating movement of the reciprocatory movable blade 10A.

As illustrated in Fig. 24 (b), the chain saw 13 is provided with a gearbox G2 at the top end of the operating part 3, which converts the rotative movement of the power transmission member 17, penetrating through the operating part 3, into the rotative movement in the perpendicular direction. This gearbox G2 comprises a bevel gear B1 provided at the top end of the power transmission member 17, another bevel gear B2 engaged with the bevel gear B1 in the perpendicular direction, and a sprocket S provided on the outer surface of the bevel gear B2. There is a support member 19, around which a chain saw blade 20 is placed, elongating toward the front of the sprocket S. The sprocket S is engaged with the chain saw blade 20 at the base end of the support member 19. Thus, the rotative movement of the power transmission member 17 is converted to a circular movement of the chain saw blade 20.

Further, as illustrated in Fig. 24 (c), the rotary cutter 15 is provided with a gearbox G3 at the top end of the operating part 3, which converts the rotative movement of the power transmission member 17, penetrating through the operating part 3, into the rotative movement in the perpendicular direction. This gearbox G3 comprises a bevel gear B1 provided at the top end of the power transmission member 17, another bevel gear B2 engaged with the bevel gear B1 in the perpendicular direction, and a rotary blade 23 connected to the bottom surface of the bevel gear B2. Thus, the rotative movement of the power transmission member 17 is converted to another rotative movement in the perpendicular direction, whereby the rotary blade 23 is driven rotatively.

However, the hedge trimmer (clippers) 10 provided at the pruning part 5 should become larger size due to mechanical members which convert the rotative movement into the reciprocating movement. Further, the chain saw 13 or the rotary cutter 15 is rather heavy, and each of the gearboxes G1, G2 and G3, serving for the conversion of driving direction, is also heavy. When the pruning of twigs at a higher position is actually done, because of the pruning part 5 provided at the top end of the lengthened operating part 3, the operator M should bear the heavy burden on the hands and the arms. Consequently, there arises a problem of pruning as being a very hard work.

In the light of technical backgrounds and problems according to the conventional high twig pruner as above discussed, it is an object of the present invention to provide a high twig pruner, in particular to provide the twig pruner having a simple structure, comprising a saw blade at the pruning part, and a drive means which reciprocatory moves the saw blade, in order to reduce the weight, whereby a workability in pruning can be increased.

### DISCLOSURE OF INVENTION

To achieve the objects mentioned above, according to claim 1 of the present invention, there is provided a high twig pruner, comprising an operating tube or an operating rod of a specified length; a saw blade attached to the top end of the operating tube or the operating rod to be movable in the forward and backward directions; a power source installed at the base end of the operating tube or the operating rod; a drive means connected to the power source in order to perform the forward and backward movements; and power transmission members for connecting the drive means and the saw blade.

According to claim 2 of the present invention, there is provided the high twig pruner as claimed in claim 1, wherein the drive means incorporating an elastic member between the saw blade and the operating tube or the operating rod, in order to permanently apply the force in the forward movement direction to the saw blade, and the drive means further having a rotative shaft, on which an eccentric shaft is provided, to be connected to the power transmission members, and in order to intermittently give the backward movement to the saw blade.

According to claim 3 of the present invention, there is provided the high twig pruner as claimed in claim 1, wherein the drive means further comprising a crank rod, connected to an eccentric shaft located on a rotative shaft and made of rod material, so that the crank rod and the rod material are connected to each other, whereby the forward and backward movements are given to the rod material, by means of conversion of rotative movement of the eccentric shaft to reciprocating movement of the crank rod.

According to claim 4 of the present invention, there is provided the high twig pruner as claimed in claim 1, wherein the drive means further comprises a pulling means, which alternately pulls two power transmission members respectively connected to the pulling means, in a form of a first power transmission member being connected to the saw blade so that the backward movement is intermittently given to the saw blade, and in a form of a second power transmission member being also connected to the saw blade, by firstly reversing the second power transmission member at a position closer to the top of the saw blade than a fixing position of the saw blade, and by secondly connecting the second power transmission member to the saw blade, so that the forward movement is intermittently given to the saw blade, whereby the saw blade makes the forward and backward movements.

According to claim 5 of the present invention, there is provided the high twig pruner as claimed in any one of claims 1 through 4, further comprising a twig pressing member provided at the top end of the operating part, along the both side surfaces of the saw blade, and elongating in the direction substantially perpendicular to the forward and backward movement directions of the saw blade.

According to claim 6 of the present invention, there is provided the high twig pruner as claimed in any one of claims 1, 2 and 4, wherein the length of the operating part may be changed, and the length of the power transmission members may be adjusted corresponding to the change of length of the operating part.

And according to claim 7 of the present invention, there is provided the high twig pruner as claimed in any one of claims 1, 2 and 4, wherein the operating part has been formed as being divided into a top section and a base section, at a position close to a pruning part, so that the top section and the base section are connected to be bendable to each other, whereby the saw blade may change the angle freely to the right and the left.

With this structure, in the case of claim 1 of the present invention, the high twig pruner comprises the saw blade, provided at the top end of the operating tube or the operating rod, and which is driven by the drive means for reciprocating movement. Thus, the saw blade makes the nimble movement in the forward and backward directions by the drive means for reciprocating movement, whereby the twigs, stalks and leaves at higher positions of trees may be surely cut and pruned without moving the operating tube or operating rod. Accordingly, the reduction of total weight and size has been accomplished by the saw blade and this drive means, the pruning of twigs at higher position of trees may be done easily.

In the case of claim 2 of the present invention, the drive means of the high twig pruner incorporates an elastic member between the saw blade and the operating tube or the operating rod, in order to permanently apply the force in the forward movement direction to the saw blade by the elastic force thereof. Further, the drive means also has a rotative shaft on which an eccentric shaft is provided, to be connected to the power transmission members, and in order to intermittently give the backward movement to the saw blade. Thus, the saw blade can make the nimble movement in the forward and backward directions by this drive means. In addition, because the power transmission members may be made of light-weight material such as flexible wire, and because the power transmission members make the return movement by the elastic member, it is possible to further reduce the weight and size.

In the case of claim 3 of the present invention, the drive means has a crank rod, connected to an eccentric shaft on a rotative shaft and made of rod material, so that the crank rod and the rod material are connected to each other, whereby the forward and backward movements are given to the rod material, by means of conversion of rotative movement of the eccentric shaft to reciprocating movement of the crank rod. Accordingly, the saw blade can make the nimble movement in the forward and backward directions by this drive means. In addition, because the structure is simple and light-weight, it is possible to further reduce the total weight of the high twig pruner.

In the case of claim 4 of the present invention, the drive means of the high twig pruner comprises a pulling means which alternately pulls two power transmission members, respectively connected thereto. The first power transmission member is connected to the saw blade, so that the backward movement is intermittently given to the saw blade. Further, the second power transmission member is also connected to the saw blade, by firstly reversing the second power transmission member at a position closer to the top of the saw blade than a fixing position of the saw blade, and by secondly connecting the second power transmission member to the saw blade, so that the forward movement is intermittently given to the saw blade, whereby the saw blade makes the forward and backward movements. Thus, the saw blade can make the nimble movement in the forward and backward directions by this drive means. In addition, because the power transmission members may be made of light-weight and flexible material such as flexible wire, the total weight and size can be reduced.

In the case of claim 5 of the present invention, the high twig pruner further has a twig pressing member, provided at the top end of the operating part, along the both side surfaces of the saw blade, and elongating in the direction substantially perpendicular to the forward and backward movement directions of the saw blade. Thus, when twigs and leaves are cut, the twig pressing member prohibits the escape of twigs and leaves from the saw blade, whereby the cutting can be surely done.

In the case of claim 6 of the present invention, the length of the operating part of the high twig pruner may be changed, and the length of the power transmission members is adjustable, whereby twigs can be pruned regardless of the height of trees, from low trees to high trees. Thus, it is possible to improve the workability in pruning.

Further, in the case of claim 7 of the present invention, the operating part of the high twig pruner has been formed as being divided into a top section and a base section, at a position close to a pruning part, so that the both sections are connected to be bendable to each other, whereby the saw blade may change the angle freely to the right and the left. Thus, when pruning such as upright twigs, the saw blade may be laid substantially at the horizontal angle, whereby the pruning in the lateral direction may be done, and the workability in pruning may further improve.

### BRIEF DESCRIPTION OF DRAWINGS

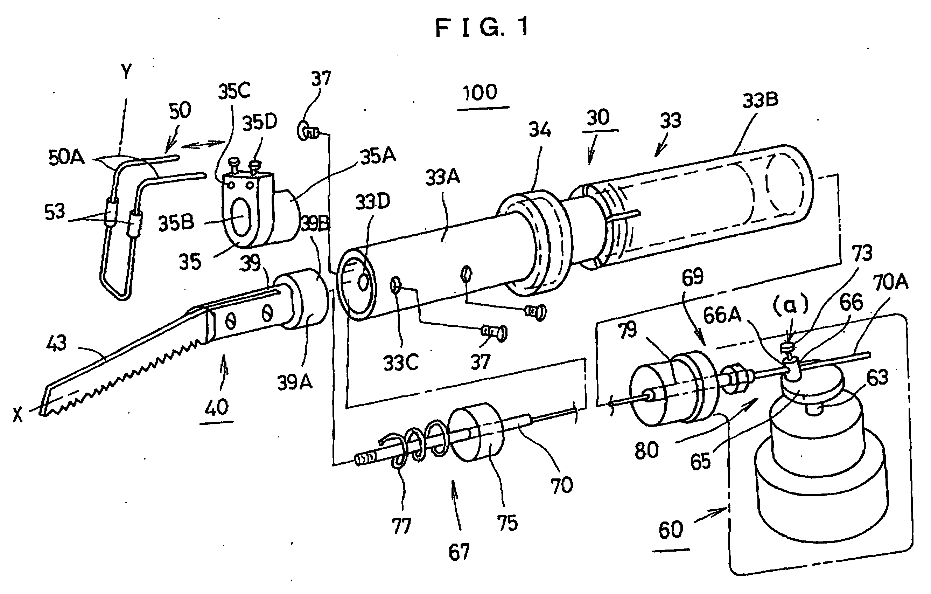

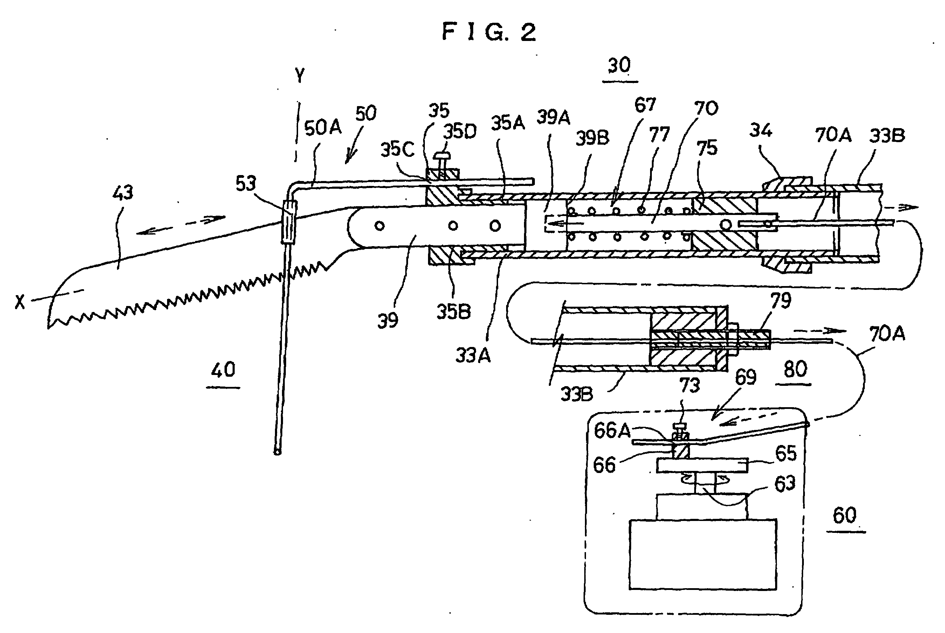

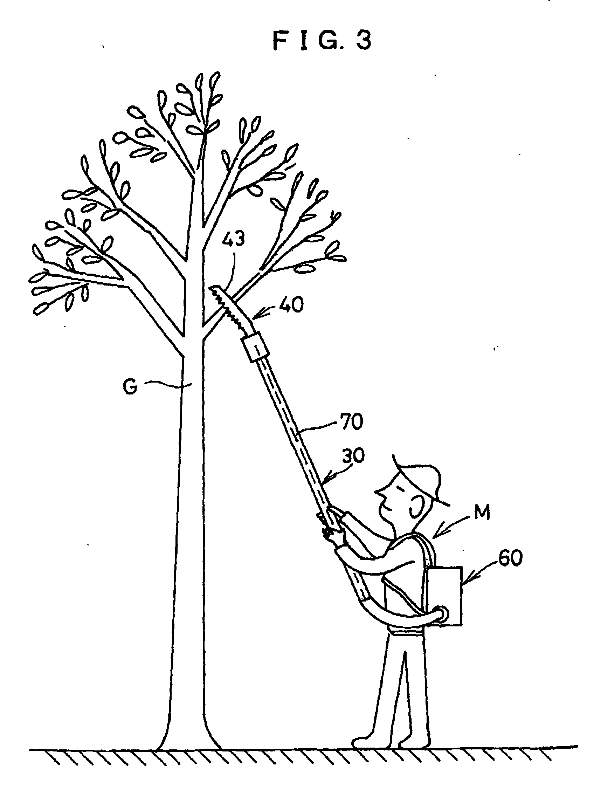

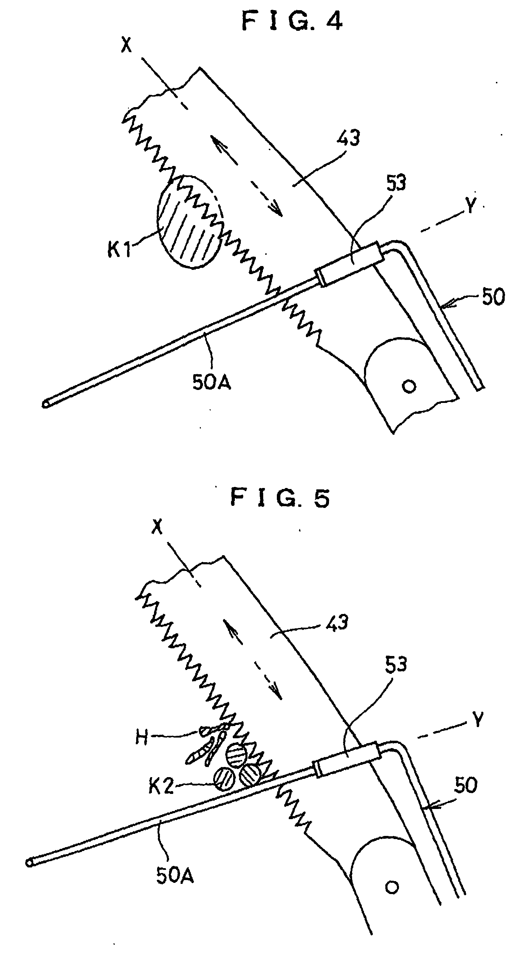

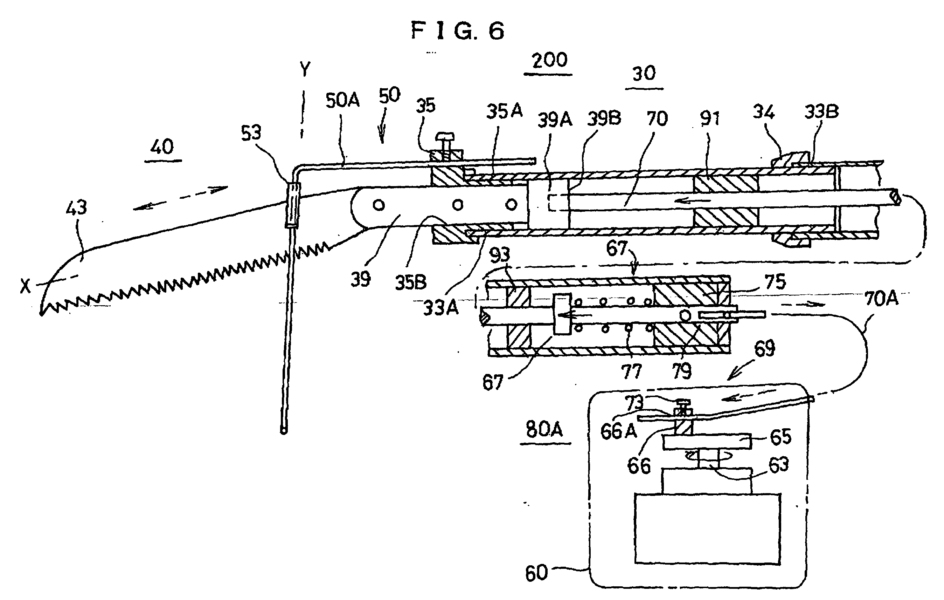

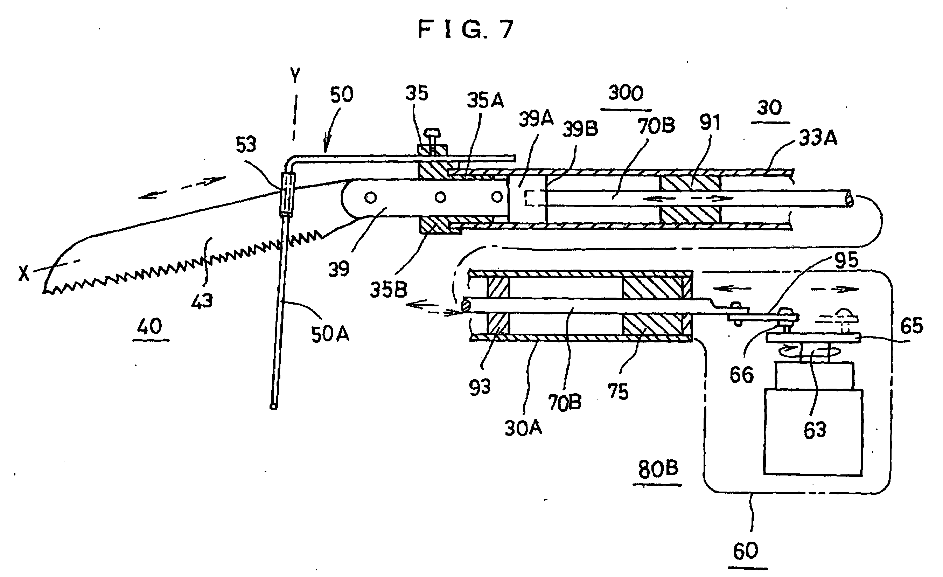

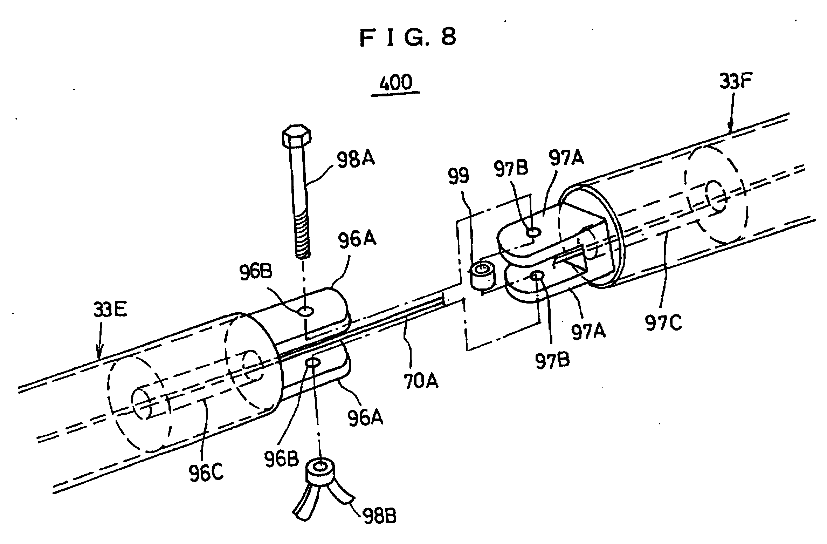

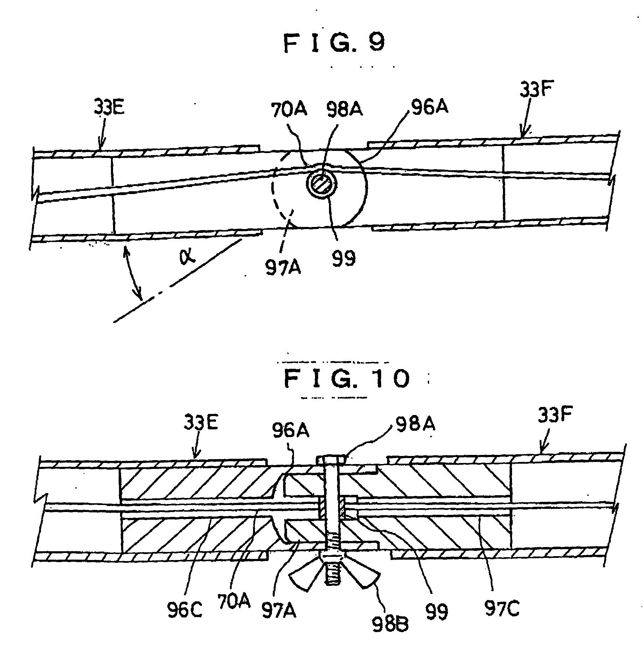

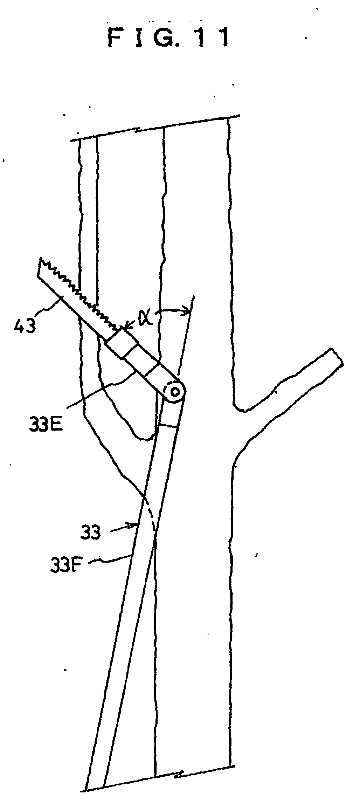

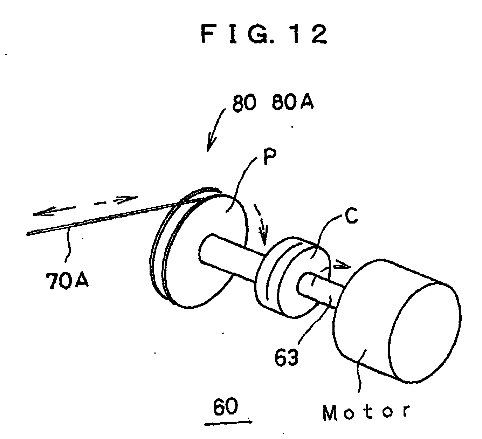

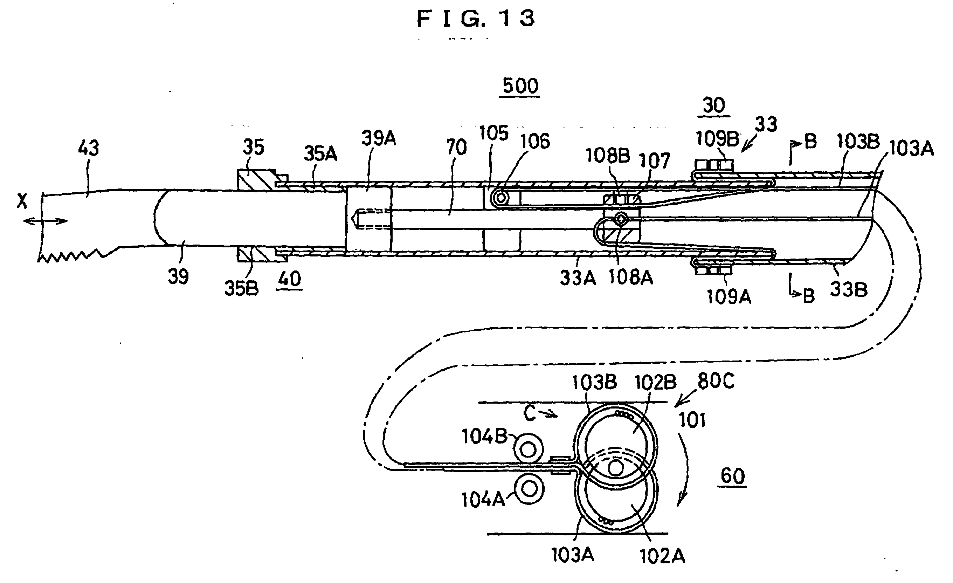

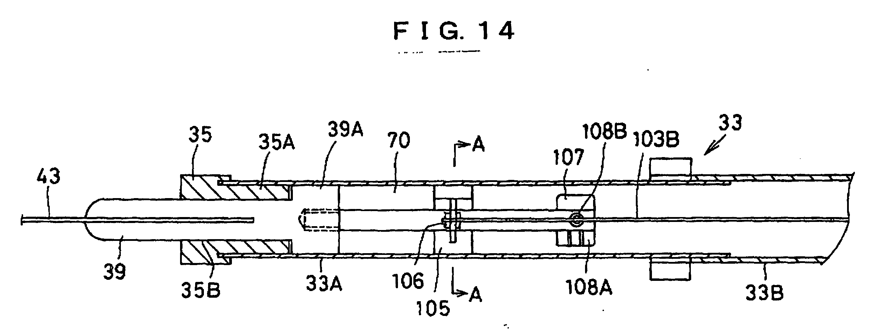

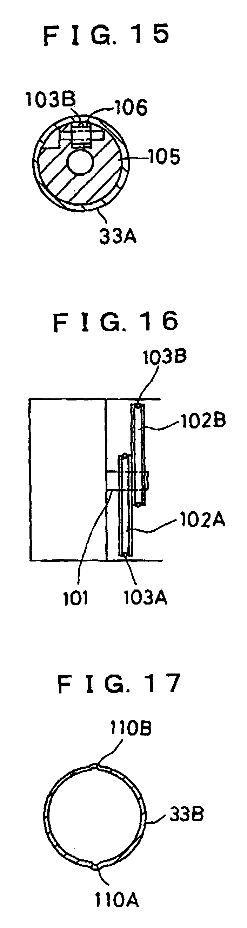

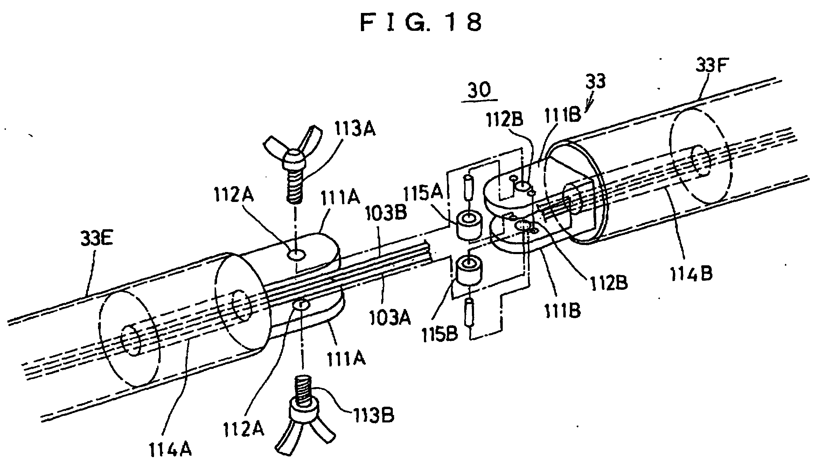

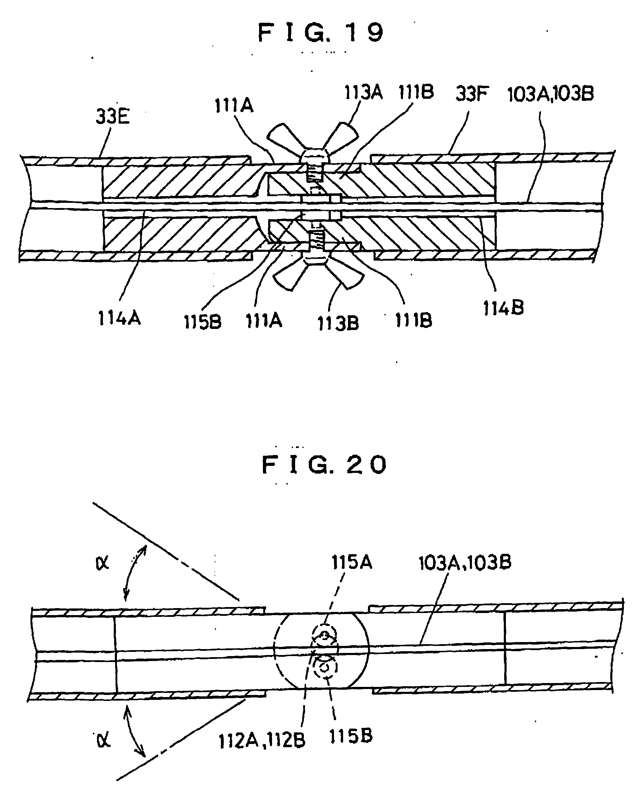

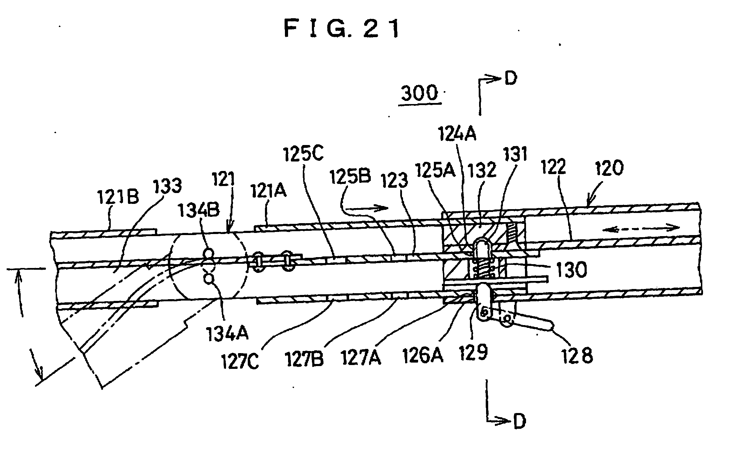

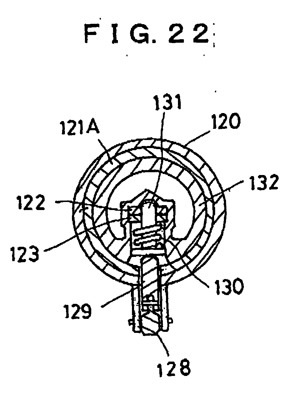

Figure 1 is an overall perspective view of a high twig pruner according to a first embodiment of the present invention; Figure 2 is a sectional view of the high twig pruner according to the first embodiment of the present invention; Figure 3 is a view showing the using state of the high twig pruner according to the first embodiment of the present invention; Figure 4 is a view showing the function and state of cutting a bough according to the first embodiment of the present invention; Figure 5 is a view showing the function and state of cutting twigs and leaves according to the first embodiment of the present invention; Figure 6 is a sectional view of a high twig pruner according to a second embodiment of the present invention; Figure 7 is a sectional view of a high twig pruner according to a third embodiment of the present invention; Figure 8 is an exploded perspective view of a high twig pruner according to a fourth embodiment of the present invention; Figure 9 is a sectional view of the high twig pruner according to the fourth embodiment of the present invention; Figure 10 is a sectional view of the high twig pruner according to the fourth embodiment of the present invention; Figure 11 is a view showing the cutting function and state of the high twig pruner according to the fourth embodiment of the present invention; Figure 12 is a perspective view of a power driving part according to a modified embodiment of the present invention; Figure 13 is a vertical section view of a high twig pruner according to a fifth embodiment of the present invention; Figure 14 is a horizontal section view of the high twig pruner according to the fifth embodiment of the present invention; Figure 15 is a view shown by a section A - A of Fig. 14 according to the fifth embodiment of the present invention; Figure 16 is a view seen in the direction of an arrow C of Fig. 14 according to the fifth embodiment of the present invention; Figure 17 is a view shown by a section B - B of Fig. 14 according to the fifth embodiment of the present invention; Figure 18 is an exploded perspective view of an operating part according to the fifth embodiment of the present invention; Figure 19 is a vertical section view of the operating part according to the fifth embodiment of the present invention; Figure 20 is a horizontal section view of the operating part according to the fifth embodiment of the present invention; Figure 21 is a vertical section view of a high twig pruner according to another embodiment of the present invention; Figure 22 is a view shown by a section D - D of Fig. 21; Figure 23 is a view showing the using state of a high twig pruner according to a prior art; and Fig. 24 is a set of perspective views showing the essential parts of the high twig pruner according to the prior art.

### BEST MODE FOR CARRYING OUT THE INVENTION

The detailed explanation of a high twig pruner according to the present invention will be now made, with reference to several embodiments as illustrated by the drawings attached hereto.

### First Embodiment

Figs. 1 and 2 illustrate a high twig pruner 100 according to a first embodiment of the present invention. There is an operating part 30 comprising an operating tube (or an operating rod) 33, which is held and operated by the hand(s). The operating tube 33 comprises a main tube 33A, and a stretchable tube 33B through which the outer surface of the main tube 33A penetrates. When a fastener ring 34, provided at the top end of the stretchable tube 33B, is loosened, the stretchable tube 33B may move in the elongating axial direction. When the fastener ring 34 is fastened at an engagement position, the stretchable tube 83B is fixed on the main tube 33A.

There is a pruning part 40 provided at the top end of the main tube 33A serving as the operating part 30. An insertion part 35A of a guide member (collar) 35 is first inserted in the main tube 33A from the top end thereof, and the insertion part 35A is then secured by stopper screws 37, inserted in holes 33C, 33D on the wall of the main tube 33A. There is a hole 35B substantially in an oval shape, penetrating through the guide member 36, in which a sliding body 39 is penetratively provided to be movable in the forward and backward (i.e. reciprocating) directions. There is a saw blade 43 attached at the top end of the sliding body 39, of which top is aiming at somewhat lower direction relative to the reciprocating direction X of the sliding body 39. The sliding body 39 may be attached in any manner as long as the reciprocating movement at the top end of the main tube 33A is guaranteed, and in the case of the operation tube, the sliding body 39 may be attached inside the main tube 33A without the guide member (collar) 35, and in the case of the operation rod, the sliding body 39 may be attached via another tube member.

The base end of the operating part 30 is provided with a power driving part 60 connected to a power source such as an engine or a motor. The power driving part 60 has a drive means 80, comprising a disk 65 attached to a rotative shaft 63, on which an eccentric shaft 66 is provided at a deviated position (a), and a power transmission member (flexible wire) 70A, of which base side penetrates through a through hole 66A of the eccentric shaft 66, so that the power transmission member (flexible wire) 70A may be fastened at an arbitrary position on the base side thereof, by a bolt 73 provided in the eccentric shaft 66. The power transmission member (flexible wire) 70A penetrates through a guide tube 79, attached to the rear end of the stretchable tube 33B at the base side of the operating part 30, to be led inside the operating part 30. Accordingly, the length of the power transmission member (flexible wire) 70 can be adjusted according to the variable length of the operating part 30, by maintaining the tension of the power transmission member (flexible wire) 70.

The top end of the power transmission member (flexible wire) 70A is connected to the rear end of another power transmission member (rod) 70A. The top end of the power transmission member (rod) 70, penetrating through the guide member 35, is connected to a rear end 39A of the sliding body 39, which is inserted in the hole 35B substantially in the oval shape, to be movable in the forward and backward directions through that hole 35B. There is a coil spring 77 made of an elastic material to which a predetermined pressing force has been applied, provided between an end surface 39B of the rear end 39A of the sliding body 39, and a fixed seat 75 having a hole through which the penetrating power transmission member (rod) 70 may move. Thus, the eccentric shaft 66, provided at the deviated position (a) of the disk 65 of the drive means 80, serves as a pulling mechanism 69 which intermittently gives the backward movement to the saw blade 43, and the coil spring 77 serves as a return mechanism 67 which permanently applies the force in the forward movement direction to the saw blade 43.

The guide member 35, positioned at the top end of the operating part 30, is provided with a twig pressing member 50. The twig pressing member 50 comprises a pair of press bars 50A positioned along the both side surfaces of the saw blade 43, elongating in the direction Y, which is substantially perpendicular to the reciprocating direction X of the saw blade 43. The press bars 50A are respectively provided with guide rollers 53. The pair of press bars 50A is respectively inserted in holes 35C in the guide member 35, to be adjustable by moving in the forward and backward directions, and may be fixed at an arbitrary position by a pair of bolts 35D. The guide rollers 53 are also adjustable by moving in the upward and downward directions. The twig pressing member 50 may be also provided by a single press bar at one side of the saw blade 43.

The function of the high twig pruner 100 as discussed above will be now described. According to the high twig pruner 100 of the first embodiment of the present invention, the pruning part 40 has a simple structure comprising the saw blade 43 and the guide member 35. Accordingly, when the power source is actuated and the drive means 80 is driven, the coil spring 77 serving as the pulling mechanism 67 provided in the drive means 80 permanently applies the force in the forward movement direction to the saw blade 43, and the return mechanism 69 intermittently gives the backward movement to the saw blade 43. Thus the saw blade 43 makes the nimble reciprocating movement. As illustrated in Fig. 3, when an operator M uses this high twig pruner 100 by carrying the power driving part 60 on the back (or holding the power driving part 60 by the hand), the operating part 30 and the pruning part 40 are both light-weight, whereby the easy pruning of twigs, stalks and leaves at rather higher positions of a tree G is accomplished.

The practical pruning by this high twig pruner 100 will be discussed with reference to Figs. 4 and 5. When a bough K1 is cut, as illustrated in Fig. 4, the upper side of the bough K1 is pressed by the saw blade 43, and in such a state, the saw blade 43 makes the reciprocating movement, whereby the bough K1 can be surely cut without becoming any unstable angle. On the other hand, the cutting of twigs K2 and leaves H is done as illustrated in Fig. 5. Because of the twig pressing member 50, provided along the both side surfaces of the saw blade 43 at about an intermediate position thereof, in the direction Y which is substantially perpendicular to the reciprocating direction X of the saw blade 43, when the twigs K2 and leaves H are cut, the twig pressing member 50 prohibits the escape of twigs K2 and leaves H from the saw blade 43, whereby the cutting can be surely done.

According to the high twig pruner 100, the pruning part 40 comprises the saw blade 43, and the guide member 35 which reciprocatory supports the saw blade 43. Further, the power transmission members 70, 70A are composed of flexible wire, etc. Thus, the reduction of weight and size can be accomplished, and the easy pruning at rather higher positions of trees may be done by the elongating operating part 30.

Further, there is the return mechanism 67 provided at the top end of the operating part 30, which permanently applies the force in the forward movement direction to the saw blade 43, and there is the return mechanism 69 provided at the base end of the operating part 30, which intermittently gives the backward movement to the saw blade 43. In addition, the power transmission member 70A connecting the above mechanisms 67 and 69 may be made of light-weight and flexible material such as flexible wire, the reduction of weight and size of the high twig pruner 100 as a whole can be accomplished.

The length of the operating part 30 may be adjusted easily, by loosening the fastening ring 34, so that the stretchable tube 33B may move in the elongating axial direction, and by fastening the fastener ring 34 at the engagement position, so that the stretchable tube 33B may be fixed on the main tube 33A at an arbitrary position. In regard to the length of the power transmission member 70A, the fastening position of the power transmission member 70A at the eccentric shaft 66, which is located on the disk 65 of the rotative shaft 63, may be adjusted in accordance with the length of the operating part 30, and the adjusted position may be fastened by the bolt 73. Thus, it is possible to prune the twigs regardless of the height of trees, from low trees to high trees.

### Second Embodiment

The present invention is not limited to the first embodiment as discussed above. For instance, it is also possible to provide a high twig pruner 200 according to a second embodiment of the present invention, as illustrated in Fig. 6. The high twig pruner 200 is provided with a modified drive means 80A of the power driving part 60, which integrally comprises the return mechanism 67 which permanently applies the force in the forward movement direction to the saw blade 43, and the return mechanism 69 which intermittently gives the backward movement to the saw blade 43, both at the base end of the operating part 30.

The return mechanism 67 of the drive means 80a and the saw blade 43 are connected by a power transmission member 70 in the form of an elongated shaft, supported by bearings 91, 93 provided inside the operating part 30. The power transmission member 70A of the pulling mechanism 69 is made of flexible wire. The other structure is substantially the same as that of the first embodiment as discussed above, so the same reference numbers are given, and the explanation thereof will not be made.

The function of the high twig pruner 200 according to the second embodiment of the present invention will be now explained. The pruning part 40, positioned at the top end of the operating part 30, is only provided with the guide member 35, the saw blade 43, and the sliding body 39 which may move in the forward and backward directions. The pruning part 40 is connected to the drive means 80A, by the power transmission member 70 in the form of shaft, provided at the top end of the operating part 30, and by the other power transmission member 70A made of flexible wire, provided at the base end of the operating part 30.

When the power source is actuated and the drive means 80A is driven, the pulling mechanism 67 provided in the drive means 80A permanently applies the force in the forward movement direction to the saw blade 43, via the power transmission members 70A, 70. Further, the return mechanism 69 intermittently gives the backward movement to the saw blade 43. Thus the saw blade 43 makes the nimble reciprocating movement by these forward and backward movements, and the saw blade 43 may prune twigs, stalks and leaves at rather higher positions of trees.

Therefore, according to the high twig pruner 200 of the second embodiment, the pruning part only comprises the saw blade 43, the sliding body 39 which may move in the forward and backward directions, and the guide member 35. The drive means 80A is completely provided at the base end of the operating part 30. Consequently, it is possible to further reduce the weight of the pruning part 40, whereby the pruning of rather higher positions of trees by the elongating operating part 30 may be done easily, and in addition, the maintenance and inspection of the drive means 80A can be done easily.

As illustrated in Fig. 5, like the case of the first embodiment, there is the twig pressing member 50, provided along the both side surfaces of the saw blade 43 at about an intermediate position thereof, in the direction Y which is substantially perpendicular to the reciprocating direction X of the saw blade 43. Thus, when the twigs K2 and leaves H are cut, the twig pressing member 50 prohibits the escape of twigs K2 and leaves H from the saw blade 43, whereby the cutting can be surely done.

It is also possible to adjust the length of the operating part 30, by loosening the fastening ring 34, so that the stretchable tube 33B may move in the elongating axial direction, and by fastening the fastener ring 34 at the engagement position, so that the stretchable tube 33B may be fixed on the main tube 33A at an arbitrary position. In regard to the length of the power transmission member 70A, the fastening position of the power transmission member 70A at the eccentric shaft 66, which is located on the disk 65 of the rotative shaft 63, may be adjusted in accordance with the length of the operating part 30, and the adjusted position may be fastened by the bolt 73. Thus, it is possible to prune twigs regardless of the height of trees, from low trees to high trees.

### Third Embodiment

It is also possible to provide a high twig pruner 300 according to a third embodiment of the present invention, as illustrated in Fig. 7. The high twig pruner 300 is provided with a further modified drive means 80B of the power driving part 60, which does not have the return mechanism for permanently applying the force in the forward movement direction to the saw blade 43, or the return mechanism for intermittently giving the backward movement to the saw blade 43. Instead, a crank rod is connected to the eccentric shaft located on the rotative shaft, and the power transmission member is made of rod material. Thus, the crank rod and the rod material are connected to each other, so that the forward and backward movements are given to the rod material, by means of conversion of rotative movement of the eccentric shaft to reciprocating movement of the crank rod. More particularly, there is a power transmission member 70B which is penetrating through the operating part 30. The power transmission member 70B is completely made of rod material, and is supported by the bearings 91, 93, respectively provided at the top and rear ends, so that the power transmission member 70B may move in the forward and backward directions. The base end of the power transmission member 70B is connected to the eccentric shaft 66, provided on the disk 66 of the rotative shaft 63, via an elastic crank rod 95. The other structure is substantially the same as that of the first embodiment as discussed above, so the same reference numbers are given, and the explanation thereof will not be made. Further, it is also possible to provide another structure by applying a slider crank mechanism thereto, wherein a slider may be connected to the rod material serving as the power transmission member 70B.

With reference to the high twig pruner 300 according to the third embodiment of the present invention, the same functions and effects, as those of the high twig pruners 100, 200 of the first and second embodiments, can be expressed.

In particular, the drive means 80B, provided in the power driving part 60, gives the forward and backward movements to the saw blade 43, first by converting the deviated rotative movement of the eccentric shaft 66 provided on the disk 65 of the rotative shaft 63, to the reciprocating movement by means of the crank rod 95, and then by transmitting such a reciprocating movement to the saw blade 43 via the power transmission member 70B

Consequently, the drive means 80B may become simple and light-weight structure, whereby the total weight of the high twig pruner may be reduced. Thus, the pruning of higher trees is further facilitated.

### Fourth Embodiment

It is also possible to provide a high twig pruner 400 according to a fourth embodiment of the present invention, as illustrated in Figs. 8 through 11. With reference to the high twig pruner 400, the operating part 30 has been formed as being divided into a top section 30E and a base section 30F, at a position close to the pruning part 40, so that the both sections are connected to be bendable to each other, whereby the saw blade 43 may change the angle freely to the right and the left. More particularly, the operating part 30 has been formed as being divided into the top section 30E and the base section 30F, and a bending mechanism is provided between the both sections. The top section 30E has an outer engagement fork 96A, and the base section 30F has an inner engagement fork 97A. The both forks are engaged with each other, and a bolt 98A is inserted to penetrate through holes 96B, 97B, and the bolt 98A is eventually fastened by a nut 98B. Consequently, the both forks are connected to be bendable to each other, and the bent angle can be fixed freely.

With this structure, the saw blade 43 may change the angle freely to the right and the left. The available maximum bending angle α may be preferably about 45 degrees, but it can be determined arbitrarily at all. The power transmission member (flexible wire) 70A is running, through holes 96C, 97C respectively provided at the center of the outer engagement fork 96A and the inner engagement fork 97A, and further in contact with a roller 99 relatively provided at the bolt 98A, so that the smooth movement of the power transmission member (flexible wire) 70A is secured. The other structure is substantially the same as that of the first embodiment as discussed above, so the same reference numbers are given, and the explanation thereof will not be made.

With reference to the high twig pruner 400 according to the fourth embodiment of the present invention, the same functions and effects, as those of the high twig pruners 100, 200 of the first and second embodiments, can be expressed.

In particular, as illustrated in Fig. 11, when pruning an upright twig, it is possible to bend the operating part 30 so that the saw blade 43 may swing to any one direction. Thereafter, the operating part 30 is turned or twisted appropriately, and the saw blade 43 is laid substantially at the horizontal angle, whereby the pruning in the lateral direction may be done. Consequently, the pruning can be done easily regardless of the angle of twigs, and the workability in pruning may further improve.

The present invention is of course not limited to the embodiment as discussed above, and arbitrary and appropriate modifications thereof are possible without departing the spirit of the present invention. For instance, although the operating tube is used for the operating part 30, it is also possible to use an operating rod for the operating part 30. When the operating rod is used, the power transmission members 70, 70A and 70B may be provided along the outer surface of the operating rod. Further, it is also possible to use a non-stretchable tube or rod for the operating part 30.

The drive means 80, 80A, provided in the power driving part 60, are not also limited to those of the above embodiments. For instance, with reference to the pulling mechanism, as illustrated in Fig. 12, it is also possible to provide a winding pulley P on the rotative shaft 63 of the power driving part 60, via a power on/off clutch C, so that the power transmission member 70A made of flexible wire is hooked to be wound by the winding pulley P. In this case, the rotative power of motor, etc. is intermittently transmitted to the winding pulley P by on/off operation of the clutch C, whereby the flexible wire is pulled, and consequently the pulling movement is given to the saw blade 43. This mechanism may be applied to the first embodiment and the second embodiment of the present invention. Further, with reference to the return mechanism provided in the drive means 80, it is not limited to the return mechanism incorporating the coil spring, to which a predetermined pressing force has been applied. For example, it is also possible to incorporate an elastic body such as rubber or air dumper to which a predetermined pressing force has been applied, and it is further possible to incorporate an elastic body in the stretched form, in order to apply the force in the forward movement direction to the saw blade. There are further various mechanisms applicable to the present invention.

### Fifth Embodiment

A high twig pruner 500, according to a fifth embodiment of the present invention, will be now described with reference to Figs. 13 through 20. According to the high twig pruner 500, there is a drive means 80C comprising a pulling means which alternately pulls two power transmission members, respectively connected thereto. The first power transmission member is connected to the saw blade, so that the backward movement is intermittently given to the saw blade. Further, the second power transmission member is also connected to the saw blade, by firstly reversing the second power transmission member at a position closer to the top of the saw blade than a fixing position of the saw blade, and by secondly connecting the second power transmission member to the saw blade, so that the forward movement is intermittently given to the saw blade, whereby the saw blade makes the forward and backward movements. More particularly, an operating part 30 comprises an operating tube (or an operating rod) 33. The operating tube 33 comprises a main tube 33A, and a stretchable tube 33B through which the main tube 33A penetrates. The main tube 33A and the stretchable tube 33B are secured, for example by a length adjusting mechanism (not shown), comprising a retractable pin, and a plurality of holes to be engaged with that pin. Thus, the stretchable tube 33B may move in the elongating direction, and the stretchable tube 33B may be then adjusted at an arbitrary length by the pin and holes.

There is a pruning part 40 provided at the top end of the main tube 33A serving as the operating part 30. An insertion part 35A of a guide member (collar) 35 is inserted in the main tube 33A from the top end thereof, and secured at that position. There is a hole 35B substantially in an oval shape, penetrating through the guide member 35, in which a sliding body 39 is penetratively provided to be movable in the forward and backward (i.e. reciprocating) directions. There is a saw blade 43 attached at the top end of the sliding body 39, of which top is aiming at somewhat lower direction relative to the reciprocating direction X of the sliding body 39. The sliding body 39 may be attached in any manner as long as the reciprocating movement at the top end of the main tube 33A is guaranteed, and in the case of the operation tube, the sliding body 39 may be attached inside the main tube 33A without the guide member (collar) 35, and in the case of the operation rod, the sliding body 39 may be attached via another tube member.

The base end of the operating part 30 is provided with a power driving part 60 connected to a power source such as an engine or a motor. The power driving part 60 has a drive means 80C, of which structure will be described as below. The drive means 80C is provided with a rotative shaft 101, connected to a power source such as an engine or a motor, and a pair of eccentric shafts 102A, 102B, of which difference of phase is 180 degrees, are attached to the rotative shaft 101. The eccentric shafts 102A, 102B are composed of a pair of needle bearings, on which the base ends of two power transmission members (flexible wires) 103A, 103B are hooked and wound respectively, whereby a pulling means is formed, which alternately pulls two power transmission members 103A, 103B. The power transmission members (flexible wires) 103A, 103B are first bundled between a pair of needle bearings, and then, like the case of the first embodiment, penetrate through a guide tube (not shown) attached to the rear end of the stretchable tube 33B at the base side of the operating part 30, to be led inside the operating part 30.

The top end of a rod 70A, penetrating through the guide member 35, is connected to a rear end 39A of the sliding body 39, which is inserted in the hole 35B substantially in the oval shape, to be movable in the forward and backward directions through that hole 35B. Further, a securing part 107 is provided at the rear end of the rod 70A, for securing the power transmission member (flexible wire) 103A. The top end side of the power transmission member (flexible wire) 103A is secured at the securing part 107 positioned at the rear end of the rod 70, by a screw 108A. Further , the top end side of the power transmission member (flexible wire) 103B is first led to a needle bearing 106, attached to a fixed seat 105 which has been inserted and fixed at the top end side in the main tube 33A, and then the top end side of the power transmission member (flexible wire) 103B is reversed toward the base end of the operating part 30, and is connected to the securing part 107 at the rear end of the power transmission member (rod) 70, by a screw 108B. Accordingly, the drive means 80 alternately pulls the two power transmission members 103A, 103B. That is, the power transmission member 103A is connected to the saw blade 43 so that the backward movement is intermittently given to the saw blade 43, and the other power transmission member 103B is also connected to the saw blade, by firstly reversing the power transmission member 103B at the position closer to the top of the saw blade 43 than the fixing position of the saw blade 43, and by secondly connecting the power transmission member 103B to the saw blade 43, so that the forward movement is intermittently given to the saw blade 43, whereby the saw blade 43 makes the forward and backward movements. In this connection, with reference to the pulling means of the drive means 80C which alternately pulls the pair of power transmission members 103A, 103B, it is also possible to use a drive shaft, mechanically connected to a power source and which can rotate in the forward and reverse directions (e.g. an output shaft of a forward/reverse rotative motor). This type of drive shaft may be attached to a disk, to which the power transmission members 103A, 103B are connected respectively with the difference of phase at 180 degrees, and which alternately pulls these power transmission members 103A, 103B. Further, it is also possible to provide another type of pulling means, comprising two power sources (e.g. two motors) with having two respective disks, to which the power transmission members (flexible wires) 103A, 103B are connected respectively with the difference of phase at 180 degrees. With this structure, when the two disks are rotated simultaneously, the power transmission members 103A, 103B (flexible wires) are pulled alternately.

The length adjustment of the operating part 30 will be described as below. The main tube 33A and the stretchable tube 33B comprises a so-called "nesting" structure, in which the stretchable tube 33B may move in the elongating axial direction out of the main tube 33. The main tube 33A and the stretchable tube 33B are secured by a length adjusting mechanism, comprising a retractable pin, and a plurality of holes to be engaged with that pin (not shown). Thus, the stretchable tube 33B may move in the elongating direction, and the stretchable tube 33B may be then adjusted at an arbitrary length by the pin and holes.

The length adjustment of the power transmission member (rod) 70A will be described as below. The power transmission member (flexible wire) 103A and the other power transmission member (flexible wire) 103B are respectively secured at the securing part 107, and the further sections of the both of the power transmission members (flexible wires) 103A, 103B, elongating out of the securing part 107, are respectively hooked at the rear end of the stretchable tube 33B. Thereafter, the two power transmission members (flexible wires) 103A, 103B respectively go through the space between the main tube 33A and the stretchable tube 33B, and then go outside via the top end of the main tube 33A. Eventually, the power transmission members (flexible wires) 103A, 103B are respectively secured by holders 109A, 109B. As illustrated in Fig. 17, the inner periphery of the main tube 33A has a pair of grooves 110A, 110B, along which the power transmission members (flexible wires) 103A, 103B are respectively placed to be movable. Thus, when the screws 108A, 108B are loosened in order to adjust the length of the operating part 30, the length of the power transmission members (flexible wires) 103A, 103B are also adjusted corresponding to the length of the operating part 30, and when the screws 108A, 108B are fastened again at the adjusted length, it is possible to adjust and maintain the tension of the power transmission members (flexible wires) 103A, 103B, in accordance with the change of length of the operating part 30. Accordingly, twigs can be pruned regardless of the height of trees, from low trees to high trees.

Further, as illustrated in Figs. 18 through 20, the operating part 30 has been formed as being divided into a top section 30E and a base section 30F, at a position close to the pruning part 40, so that the both sections are connected to be bendable to each other, whereby the saw blade 43 may change the angle freely to the right and the left. More particularly, the operating tube 33 has been formed as being divided into the top section 33E and the base section 33F, and a bending mechanism is provided between the both sections. The top section 33E has an outer engagement fork 111A, and the base section 33F has an inner engagement fork 111B. The both forks are engaged with each other, and bolts 113A, 113B are respectively inserted in holes 112A, 112B to be fastened. Consequently, the both forks are connected to be bendable to each other, and the bent angle can be fixed freely.

With this structure, the saw blade 43 may change the angle freely to the right and the left. The available maximum bending angle α may be preferably about 45 degrees, but it can be determined arbitrarily at all. The power transmission members (flexible wires) 103A, 103B are running, through holes 114A, 114B respectively provided at the center of the outer engagement fork 111A and the inner engagement fork 111B. The inner engagement fork 111B has a pair of rotative rollers 115A, 115B, which are respectively in contact with the power transmission members (flexible wires) 103A, 103B, in order to secure the smooth movement of the power transmission members (flexible wires) 103A, 103B at any bent angle.

In particular, as illustrated in Fig. 11, when pruning an upright twig, it is possible to bend the operating part 30 so that the saw blade 43 may swing to any one direction. Thereafter, the operating part 30 is turned or twisted appropriately, and the saw blade 43 is laid substantially at the horizontal angle, whereby the pruning in the lateral direction may be done. Consequently, the pruning can be done easily regardless of the angle of twigs, and the workability in pruning may further improve.

The function of the high twig pruner 500 as discussed above will be now described. According to the high twig pruner 500 of the fifth embodiment of the present invention, when the power source is actuated and the drive means 80C is driven, the rotative shaft 101 mechanically connected to the power source rotates, whereby the pair of eccentric shafts 102A, 102B, which have been attached to the rotative shaft 101 respectively with the difference of phase at 180 degrees, are rotated. Hence, the power transmission members (flexible wires) 103A, 103B, respectively hooked and wound by the eccentric shafts 102A, 103B, make the pulling movements alternately. The top end side of the power transmission member (flexible wire) 103A is secured at the securing part 107 positioned at the rear end of the rod 70, by the screw 108A. Further , the top end side of the power transmission member (flexible wire) 103B is first led to the needle bearing 106, attached to the fixed seat 105 which has been inserted and fixed at the top end side in the main tube 33A, and then the top end side of the power transmission member (flexible wire) 103B is reversed toward the base end of the operating part 30, and is connected to the securing part 107 at the rear end of the power transmission member (rod) 70, by a screw 108B. Accordingly, the saw blade 43 is repeatedly driven in the forward and backward directions, and thus makes the nimble reciprocating movement. As illustrated in Fig 3, when the operator M uses this high twig pruner 500 by carrying the power driving part 60 on the back (or holding the power driving part 60 by the hand), the operating part 30 and the pruning part 40 are both light-weight, whereby the easy pruning of twigs, stalks and leaves at rather higher positions of the tree G is accomplished.

According to the high twig pruner 500, the pruning part 40 comprises the saw blade 43, and the guide member 35 which reciprocatory supports the saw blade 43. Further, the power transmission members 103A, 103B are composed of flexible wires, the reduction of weight and size can be accomplished, and the easy pruning at rather higher positions of trees may be done by the elongating operating part 30.

Further, with regard to the drive means 80C for driving the saw blade 43, the rotative shaft 101 has been connected to the power source, and the pair of eccentric shafts 102A, 102B, of which difference of phase is 180 degrees, is attached to the rotative shaft 101. The eccentric shafts 102A, 102B respectively hook and wind the base ends of the two power transmission members (flexible wires) 103A, 103B. Accordingly, the structure is simple and light-weight, and because it is possible to use light-weight and flexible material such as flexible wire, the total weight and size of the high twig pruner 100 can be reduced.

The present invention is of course not limited to the embodiment as discussed above, and arbitrary and appropriate modifications thereof are possible without departing the spirit of the present invention. For instance, Figs. 21 and 22 illustrate a modified example of the high twig pruner 300 according to the third embodiment of the present invention, which has been shown in Fig. 7. With reference to Figs. 21 and 22, the operating part 30 has a stretchable structure, and the angle of the operating part 30 adjacent to the pruning part 40 can be changed freely.

First, the stretchable structure of the operating part 30 will be explained. With reference to the operating tube 30, a stretchable tube 121 is inserted in a main tube 120, so that the both tubes may constitute the "nesting" structure. Further, the rod matexial has been divided into two band plates, i.e. a first band plate 122 incorporated in the main tube 120, and a second band plate 123 incorporated in the stretchable tube 121. The first and second band plates 122, 123 are overlapped with each other, and holes 124A, 125A are respectively formed in the first and second band plates 122 and 123, at the overlapping section. Further, the main tube 120 and the stretchable tube 121 respectively have holes 126A, 127A, at the position common to the holes 124A, 125A. The second band plate 123 and the stretchable tube 121 respectively have a plurality of holes 125B, 125C, 127B, 127C, at predetermined intervals common to each other, along the movement direction of the stretchable tube 121. There is a first pin 129 to be inserted in the holes 126A, 127A, which have been respectively provided at the common position of the main tube 120 and the stretchable tube 121, by a lever 128 provided on the outer surface of the main tube 120. There is a second pin 131, which is inserted in the holes 124A, 125A, commonly provided at the overlapping section of the first band plate 122 and the second band plate 123. The second pin 131 is pressed by a spring 130 toward a first pin 129. As the head of the first pin 129 presses the second pin 131, the second pin 131 penetrates through the holes 124A, 125A, and reaches the holder 132 by securing the first band plate 122. When the lever 128 is pressed to the release position, the first pin 129 is pulled off, and the second pin 131 also moves toward the first pin 129, whereby the main tube 120 and the stretchable tube 121 may be stretched freely, and simultaneously the first band plate 122 and the second band plate 123 are also stretched. Further, when the first pin 129 is inserted in the holes of the main tube 120 and the stretchable tube 121 at any common position, the length of the main tube 120 and the stretchable tube 121 is fixed, and because the first pin 129 presses the second pin 131, the second pin 131 maintains the securing state of the first band plate 122 and the second band plate 123. At that time, the first pin 129 and the bottom surface of the second pin 131 are in slidable contact to each other, whereby the reciprocating movement can be transmitted.

Further, the operating part 30 has been formed as being divided into a top section 121A and a base section 121B, at a position close to the pruning part 40, so that the both sections are connected to be bendable to each other, whereby the saw blade 43 may change the angle freely to the right and the left. The structure is substantially the same as the embodiment shown in Figs. 18 through 20, that is, the operating tube 33 has been formed as being divided into the top section 121A and the base section 121B, which are connected to be bendable to each other, and the saw blade may be fixed at an arbitrary angle. For that purpose, a band plate 133 is used as the power transmission member, made of flexible material such as spring steel, and the band plate 133 runs through a pair of rollers 134A, 134B. Accordingly, the band plate 133 can express its power transmission function even in the bent state, whereby the saw blade 43 can be attached to the operating part 30, and the saw blade 43 can change the angle freely to the right and the left.

### INDUSTRIAL APPLICABILITY

As above discussed, according to claim 1 of the present invention, the high twig pruner comprises the saw blade, provided at the top end of the operating tube or the operating rod, and which is driven by the drive means for reciprocating movement. The saw blade makes the nimble movement in the forward and backward directions by the drive means for reciprocating movement, whereby the twigs, stalks and leaves at higher positions of trees may be surely cut and pruned without moving the operating tube or operating rod. Further, the reduction of total weight and size has been accomplished by the saw blade and this drive means, the pruning of twigs at higher position of trees may be done easily.

According to claim 2 of the present invention, the drive means of the high twig pruner incorporates an elastic member between the saw blade and the operating tube or the operating rod, in order to permanently apply the force in the forward movement direction to the saw blade by the elastic force thereof. Further, the drive means also has a rotative shaft on which an eccentric shaft is provided, to be connected to the power transmission members, and in order to intermittently give the backward movement to the saw blade. Thus, the saw blade can make nimbler movement in the forward and backward directions by this drive means. In addition, the power transmission members may be made of light-weight material such as flexible wire, and the power transmission members makes the return movement by the elastic member, whereby further reduction of weight and size may be accomplished.

According to claim 3 of the present invention, the drive means of the high twig pruner has a crank rod, connected to an eccentric shaft on a rotative shaft and made of rod material, so that the crank rod and the rod material are connected to each other, whereby the forward and backward movements are given to the rod material, by means of conversion of rotative movement of the eccentric shaft to reciprocating movement of the crank rod. Thus, the saw blade can make much nimbler movement in the forward and backward directions by this drive means. In addition, because the structure is simple and light-weight, it is possible to further reduce the weight and size.

According to claim 4 of the present invention, the drive means of the high twig pruner comprises a pulling means which alternately pulls two power transmission members, respectively connected thereto. The first power transmission member is connected to the saw blade, so that the backward movement is intermittently given to the saw blade. Further, the second power transmission member is also connected to the saw blade, by firstly reversing the second power transmission member at a position closer to the top of the saw blade than a fixing position of the saw blade, and by secondly connecting the second power transmission member to the saw blade, so that the forward movement is intermittently given to the saw blade, whereby the saw blade makes the forward and backward movements. Thus, the saw blade can make much nimbler movement in the forward and backward directions by this drive means. In addition, because the power transmission members may be made of light-weight and flexible material such as flexible wires, and because the structure is simple and light-weight, it is possible to further reduce the weight and size.

According to claim 5 of the present invention, the high twig pruner is further provided with a twig pressing member. Thus, when twigs and leaves are cut, the twig pressing member prohibits the escape of twigs and leaves from the saw blade, whereby the cutting can be surely done.

According to claim 6 of the present invention, the length of the operating part of the high twig pruner may be changed, and the length of the power transmission members may be adjusted corresponding to the change of length of the operating part. Thus, it is possible to prune twigs regardless of the height of trees, from low trees to high trees, whereby the improvement of workability in pruning can be accomplished.

According to claim 7 of the present invention, the operating parts are connected to be bendable to each other, whereby the saw blade may change the angle freely to the right and the left. Consequently, when pruning such as upright twigs, the saw blade may be laid substantially at the horizontal angle, whereby the pruning in the lateral direction may be done, and it is possible to further improve the workability in pruning.

## Claims

1. A high twig pruner, comprising an operating tube or an operating rod of a specified length (33); a saw blade (43) attached to the top end of said operating tube or said operating rod to be movable in the forward and backward directions; a power source installed at the base end of said operating tube or said operating rod; a drive means (80) connected to said power source in order to perform the forward and backward movements; and power transmission members (70A, 70) for connecting said drive means and said saw blade.

2. The high twig pruner as claimed in claim 1, wherein said drive means incorporating an elastic member (67) between said saw blade and said operating tube or said operating rod, in order to permanently apply the force in the forward movement direction to said saw blade, and said drive means further having a rotative shaft (63), on which an eccentric shaft (66) is provided, to be connected to said power transmission members, and in order to intermittently give the backward movement to said saw blade.

3. The high twig pruner as claimed in claim 1, wherein said drive means further comprising a crank rod (95), connected to an eccentric shaft (66) located on a rotative shaft (63) and made of rod material, so that said crank rod and said rod material are connected to each other, whereby the forward and backward movements are given to said rod material, by means of conversion of rotative movement of said eccentric shaft to reciprocating movement of said crank rod.

4. The high twig pruner as claimed in claim 1, wherein said drive means further comprises a pulling means (80C), which alternately pulls two power transmission members (103A, 103B) respectively connected to said pulling means, in a form of a first power transmission member (103A) being connected to said saw blade so that the backward movement is intermittently given to said saw blade, and in a form of a second power transmission member (103B) being also connected to said saw blade, by firstly reversing said second power transmission member at a position (106) closer to the top of said saw blade than a fixing position (107) of said saw blade, and by secondly connecting said second power transmission member to said saw blade, so that the forward movement is intermittently given to said saw blade, whereby said saw blade makes the forward and backward movements.

5. The high twig pruner as claimed in any one of claims 1 through 4, further comprising a twig pressing member (50) provided at the top end of said operating part, along the both the surfaces of said saw blade, and elongating in the direction substantially perpendicular to the forward and backward movement directions of said saw blade.

6. The high twig pruner as claimed in any one of claims 1, 2 and 4, wherein the length of said operating part (33) may be changed, and the length of said power transmission members may be adjusted corresponding to the change of length of said operating part.

7. The high twig pruner as claimed in any one of claims 1, 2 and 4, wherein said operating part has been formed as being divided into a top section (30E) and a base section (30F), at a position close to a pruning part (40), so that said top section and said base section are connected to be bendable to each other, whereby said saw blade may change the angle freely to the right and the left.
